# EUROPEAN PATENT APPLICATION

(11) **EP 3 324 335 A1**
(43) Date of publication of application: **23.05.2018**
(21) Application number: 17201336.9
(22) Date of filing: 13.11.2017
(51) Int. Cl.: G06K 9/00

(54) **IMAGE DATA EXTRACTION APPARATUS AND IMAGE DATA EXTRACTION METHOD**

(30) Priority: 17.11.2016 JP 2016224029
(71) Applicant: Panasonic Intellectual Property Corporation of America, Torrance, CA 90503 (US)
(72) Inventor: SHODA, Yukie, Osaka-shi,, Osaka 540-6207 (JP); TANIGAWA, Toru, Osaka-shi,, Osaka 540-6207 (JP)
(74) Representative: Grünecker Patent- und Rechtsanwälte PartG mbB

(57) **Abstract**

An image data extraction apparatus includes: storage; and circuitry that, in operation, performs operations including acquiring moving image data from an image-taking apparatus disposed in a movable body, acquiring movement information regarding a movement of at least either the movable body or the image-taking apparatus, and extracting learning image data that is used in learning of an identifier that identifies a physical object in an image.

## Description

### BACKGROUND

### 1. Technical Field

The present disclosure relates to an image data extraction apparatus and an image data extraction method for extracting, from moving image data, learning image data that is used in learning of an identifier that identifies a physical object in an image.

### 2. Description of the Related Art

Conventionally, there has been known an identification apparatus that uses an identifier to identify a physical object in image data. The conventional identification apparatus increases the identification accuracy of the identifier by performing machine learning on the identifier. In a case where learning data for machine learning is created from moving image data, variations of learning data are increased by performing annotation processing on image data extracted at appropriate time intervals. In annotation processing, a user inputs a correct label that indicates a physical object that the identifier identifies and the correct label thus inputted is attached to learning image data.

For example, in pedestrian detection described in Piotr Dollar, Christian Wojek, Bernt Schiele, Pietro Perona, "Pedestrian Detection: A Benchmark", the IEEE Conference on Computer Vision and Pattern Recognition (CVPR), 20-25 June 2009, pp. 304-311, a labeler draws, in all frames of moving image data, boundary boxes (BBs) that indicate all ranges of the whole pedestrian.

In the conventional pedestrian detection disclosed in Piotr Dollar, Christian Wojek, Bernt Schiele, Pietro Perona, "Pedestrian Detection: A Benchmark", the IEEE Conference on Computer Vision and Pattern Recognition (CVPR), 20-25 June 2009, pp. 304-311, annotation processing is performed on all frames of moving image data. In a case where annotation processing is performed on all frames of moving image data, a lot of time will be required for annotation processing.

Therefore, in order to increase variations of learning data while reducing annotation processing, it is conceivable that frames on which annotation processing is to be performed may be extracted at regular time intervals.

However, in a case where frames are extracted at regular time intervals, a frame of image data in which no physical object is contained is extracted, with the result that time is wasted on annotation processing.

### SUMMARY

One non-limiting and exemplary embodiment provides an image data extraction apparatus and an image data extraction method that make it possible to increase variations of learning data and reduce annotation processing.

In one general aspect, the techniques disclosed here feature an image data extraction apparatus including: storage; and circuitry that, in operation, performs operations including acquiring moving image data from an image-taking apparatus disposed in a movable body, acquiring movement information regarding a movement of at least either the movable body or the image-taking apparatus, and extracting learning image data that is used in learning of an identifier that identifies a physical object in an image.

The present disclosure makes it possible to increase variations of learning data and reduce annotation processing.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram showing a configuration of a self-guided vehicle according to Embodiment 1;
Fig. 2 is a block diagram showing a configuration of an image data extraction apparatus according to Embodiment 1;
Fig. 3 is a block diagram showing a configuration of a learning apparatus according to Embodiment 1;
Fig. 4 is a flow chart for explaining the operation of the image data extraction apparatus according to Embodiment 1;
Fig. 5 is a flow chart for explaining the operation of the learning apparatus according to Embodiment 1;
Fig. 6 is a block diagram showing a configuration of an image data extraction apparatus according to Embodiment 2;
Fig. 7 is a flow chart for explaining the operation of the image data extraction apparatus according to Embodiment 2;
Fig. 8 is a block diagram showing a configuration of an image data extraction apparatus according to Embodiment 3;
Fig. 9 is a flow chart for explaining the operation of the image data extraction apparatus according to Embodiment 3;
Fig. 10 is a block diagram showing a configuration of an image data extraction apparatus according to Embodiment 4;
Fig. 11 is a flow chart for explaining the operation of the image data extraction apparatus according to Embodiment 4;
Fig. 12 is a schematic view for explaining a region extraction process that is performed by the image data extraction apparatus according to Embodiment 4;
Fig. 13 is a block diagram showing a configuration of an image data extraction apparatus according to Embodiment 5;
Fig. 14 is a flow chart for explaining the operation of the image data extraction apparatus according to Embodiment 5;
Fig. 15A is a schematic view for explaining an image data extraction process that is performed by the image data extraction apparatus according to Embodiment 5;
and
Fig. 15B is a schematic view for explaining an image data extraction process that is performed by the image data extraction apparatus according to Embodiment 5.

### DETAILED DESCRIPTION

### Underlying Knowledge Forming Basis of the Present Disclosure

As mentioned above, for example, in pedestrian detection described in Piotr Dollar, Christian Wojek, Bernt Schiele, Pietro Perona, "Pedestrian Detection: A Benchmark", the IEEE Conference on Computer Vision and Pattern Recognition (CVPR), 20-25 June 2009, pp. 304-311, a labeler draws, in all frames of moving image data, boundary boxes (BBs) that indicate all ranges of the whole pedestrian.

In the conventional pedestrian detection disclosed in Piotr Dollar, Christian Wojek, Bernt Schiele, Pietro Perona, "Pedestrian Detection: A Benchmark", the IEEE Conference on Computer Vision and Pattern Recognition (CVPR), 20-25 June 2009, pp. 304-311, annotation processing is performed on all frames of moving image data. In a case where annotation processing is performed on all frames of moving image data, a lot of time will be required for annotation processing.

Therefore, in order to increase variations of learning data while reducing annotation processing, it is conceivable that frames on which annotation processing is to be performed may be extracted at regular time intervals.

However, in a case where frames are extracted at regular time intervals, a frame of image data in which no physical object is contained is extracted, with the result that time may be wasted on annotation processing. For example, in the case of detection of a person from moving image data captured by a surveillance camera fixed in place, there are a lot of image data showing no person at all, depending on time periods. Further, in the case of detection of a person from moving image data that varies little with time, annotation processing is performed on substantially the same image data, with the result that variations of learning data cannot be increased.

According to an aspect of the present disclosure, an image data extraction apparatus includes: storage; and circuitry that, in operation, performs operations including acquiring moving image data from an image-taking apparatus disposed in a movable body, acquiring movement information regarding a movement of at least either the movable body or the image-taking apparatus, and extracting learning image data that is used in learning of an identifier that identifies a physical object in an image.

According to this configuration, the moving image data is acquired from the image-taking apparatus disposed in the movable body. The information regarding the movement of at least either the movable body or the image-taking apparatus is acquired. The learning image data is extracted from the moving image data on the basis of the movement information.

Therefore, image data in which a physical object is highly likely to be contained is extracted on the basis of the movement information. This makes it possible to increase variations of learning data and reduce annotation processing.

Further, in the image data extraction apparatus, the movement information may include a moving speed of the movable body, and the extracting may extract the learning image data from the moving image data on the basis of the moving speed.

According to this configuration, the movement information includes the moving speed of the movable body, and the learning image data is extracted from the moving image data on the basis of the moving speed. This eliminates the need to perform annotation processing on all image data contained in the moving image data, thus making it possible to reduce annotation processing.

Further, in the image data extraction apparatus, in a case where the moving speed is equal to or higher than a predetermined speed, the extracting may extract the learning image data from the moving image data at first frame intervals, and in a case where the moving speed is lower than the predetermined speed, the extracting may extract the learning image data from the moving image data at second frame intervals that are longer than the first frame intervals.

According to this configuration, in a case where the moving speed is equal to or higher than the predetermined speed, the learning image data is extracted from the moving image data at the first frame intervals, and in a case where the moving speed is lower than the predetermined speed, the learning image data is extracted from the moving image data at the second frame intervals, which are longer than the first frame intervals.

Therefore, in a case where the movable body is moving at a high speed, variations of learning image data can be increased by increasing the frequency of extraction of learning image data and thereby increasing the number of pieces of learning image data to be acquired. Further, in a case where the movable body is moving at a low speed, the same learning image data can be reduced by decreasing the frequency of extraction of learning image data and thereby reducing the number of pieces of learning image data to be acquired, so that annotation processing can be reduced.

Further, in the image data extraction apparatus, the movement information may include an acceleration of the movable body, and the extracting may extract the learning image data from the moving image data on the basis of the acceleration.

According to this configuration, the movement information includes the acceleration of the movable body, and the learning image data is extracted from the moving image data on the basis of the acceleration. This eliminates the need to perform annotation processing on all image data contained in the moving image data, thus making it possible to reduce annotation processing.

Further, in the image data extraction apparatus, the extracting may determine whether the acceleration is equal to or higher than a predetermined acceleration, in a case where the extracting has determined that the acceleration is equal to or higher than the predetermined acceleration, the extracting may extract the learning image data from the moving image data, and in a case where the extracting has determined that the acceleration is lower than the predetermined acceleration, the extracting may not extract the learning image data from the moving image data.

According to this configuration, it is determined whether the acceleration is equal to or higher than the predetermined acceleration, in a case where it has been determined that the acceleration is equal to or higher than the predetermined acceleration, the learning image data is extracted from the moving image data, and in a case where it has been determined that the acceleration is lower than the predetermined acceleration, the learning image data is not extracted from the moving image data.

Therefore, in a case where it has been determined that the acceleration is equal to or higher than the predetermined acceleration, the learning image data is extracted from the moving image data, and in a case where it has been determined that the acceleration is lower than the predetermined acceleration, the learning image data is not extracted from the moving image data. This makes it possible to reduce annotation processing by decreasing the frequency of extraction of learning image data and thereby reducing the number of pieces of learning image data to be acquired.

Further, in the image data extraction apparatus, the movement information may include a steering angle of the movable body, and the extracting may extract the learning image data from the moving image data on the basis of the steering angle.

According to this configuration, the movement information includes the steering angle of the movable body, and the learning image data is extracted from the moving image data on the basis of the steering angle. This eliminates the need to perform annotation processing on all image data contained in the moving image data, thus making it possible to reduce annotation processing.

Further, in the image data extraction apparatus, the extracting may determine whether the steering angle is equal to or larger than a predetermined angle, in a case where the extracting has determined that the steering angle is equal to or larger than the predetermined angle, the extracting may extract the learning image data from the moving image data, and in a case where the extracting has determined that the steering angle is smaller than the predetermined angle, the extracting may not extract the learning image data from the moving image data.

According to this configuration, it is determined whether the steering angle is equal to or larger than the predetermined angle, in a case where it has been determined that the steering angle is equal to or larger than the predetermined angle, the learning image data is extracted from the moving image data, and in a case where it has been determined that the steering angle is smaller than the predetermined angle, the learning image data is not extracted from the moving image data.

Therefore, in a case where it has been determined that the steering angle is equal to or larger than the predetermined angle, the learning image data is extracted from the moving image data, and in a case where it has been determined that the steering angle is smaller than the predetermined angle, the learning image data is not extracted from the moving image data. This makes it possible to reduce annotation processing by decreasing the frequency of extraction of learning image data and thereby reducing the number of pieces of learning image data to be acquired.

Further, in the image data extraction apparatus, the operations may further include calculating a first image variation of each pixel between the learning image data thus extracted and first learning image data extracted previous to the learning image data thus extracted, and calculating a second image variation of each pixel between the first learning image data extracted previous to the learning image data thus extracted and second learning image data extracted previous to the learning image data thus extracted.

According to this configuration, the first image variation of each pixel between the learning image data thus extracted and the first learning image data extracted previous to the learning image data thus extracted is calculated, and the second image variation of each pixel between the first learning image data extracted previous to the learning image data thus extracted and the second learning image data extracted previous to the learning image data thus extracted is calculated. A region constituted by pixels that vary in value between the first image variation and the second image variation is extracted as new learning image data from the learning image data thus extracted.

This makes it possible to reduce the amount of data that is accumulated, as image data extracted from moving image data is not accumulated as learning image data without being processed but, of the image data extracted from the moving image data, only a region of variation from the previously extracted image data is accumulated as learning image data.

Further, in the image data extraction apparatus, the movement information may include a moving speed of the movable body, and the operations may further include calculating an image variation of each pixel between each frame of the moving image data and a previous frame, and correcting the image variation according to the moving speed, wherein the extracting may extract the learning image data from the moving image data in a case where a sum of the image variations thus corrected is equal to or larger than a predetermined value.

According to this configuration, the movement information includes the moving speed of the movable body. The image variation of each pixel between each frame of the moving image data and the previous frame is calculated. The image variation is corrected according to the moving speed. The learning image data is extracted from the moving image data in a case where the sum of the image variations thus corrected is equal to or larger than the predetermined value.

Therefore, the learning image data is extracted from the moving image data in a case where the sum of the image variations corrected according to the moving speed of the movable body is equal to or larger than the predetermined value. This makes it possible to extract the learning image data from the moving image data according to the actual amount of movement of an object in image data.

Further, in the image data extraction apparatus, the movement information regarding the movement of the image-taking apparatus may include a moving speed or moving angular speed of a lens of the image-taking apparatus, and the extracting may extract the learning image data from the moving image data on the basis of the moving speed or the moving angular speed.

According to this configuration, the movement information regarding the movement of the image-taking apparatus includes the moving speed or moving angular speed of the lens of the image-taking apparatus, and the learning image data is extracted from the moving image data on the basis of the moving speed or the moving angular speed. This eliminates the need to perform annotation processing on all image data contained in the moving image data, thus making it possible to reduce annotation processing.

Further, in the image data extraction apparatus, in a case where the moving speed or the moving angular speed is equal to or higher than a predetermined speed, the extracting may extract the learning image data from the moving image data at first frame intervals, and in a case where the moving speed is lower than the predetermined speed, the extracting may extract the learning image data from the moving image data at second frame intervals that are longer than the first frame intervals.

According to this configuration, in a case where the moving speed or the moving angular speed is equal to or higher than the predetermined speed, the learning image data is extracted from the moving image data at the first frame intervals, and in a case where the moving speed or the moving angular speed is lower than the predetermined speed, the learning image data is extracted from the moving image data at the second frame intervals, which are longer than the first frame intervals.

Therefore, in a case where the lens of the image-taking apparatus is moving at a high speed, variations of learning image data can be increased by increasing the frequency of extraction of learning image data and thereby increasing the number of pieces of learning image data to be acquired. Further, in a case where the lens of the image-taking apparatus is moving at a low speed, the same learning image data can be reduced by decreasing the frequency of extraction of learning image data and thereby reducing the number of pieces of learning image data to be acquired, so that annotation processing can be reduced.

Further, in the image data extraction apparatus, the movement information regarding the movement of the image-taking apparatus may include a moving speed or moving angular speed of a lens of the image-taking apparatus, and the operations may further include calculating an image variation of each pixel between each frame of the moving image data and a previous frame, and correcting the image variation according to the moving speed or the moving angular speed, wherein the extracting may extract the learning image data from the moving image data in a case where a sum of the image variations thus corrected is equal to or larger than a predetermined value.

According to this configuration, the movement information regarding the movement of the image-taking apparatus includes the moving speed or moving angular speed of the lens of the image-taking apparatus. The image variation of each pixel between each frame of the moving image data and the previous frame is calculated. The image variation is corrected according to the moving speed or the moving angular speed. The learning image data is extracted from the moving image data in a case where the sum of the image variations thus corrected is equal to or larger than the predetermined value.

Therefore, the learning image data is extracted from the moving image data in a case where the sum of the image variations corrected according to the moving speed or moving angular speed of the lens of the image-taking apparatus is equal to or larger than the predetermined value. This makes it possible to extract the learning image data from the moving image data according to the actual amount of movement of an object in image data.

Further, in the image data extraction apparatus, the moving speed or moving angular speed of the lens of the image-taking apparatus may be calculated on the basis of a relative movement of the image-taking apparatus with respect to the movement of the movable body.

According to this configuration, the moving speed or moving angular speed of the lens of the image-taking apparatus can be calculated on the basis of the relative movement of the image-taking apparatus with respect to the movement of the movable body.

Further, in the image data extraction apparatus, the moving speed or moving angular speed of the lens of the image-taking apparatus may be generated by a motion of the image-taking apparatus per se.

According to this configuration, the moving speed or moving angular speed of the lens of the image-taking apparatus, which is generated by the motion of the image-taking apparatus per se, can be utilized.

Further, in the image data extraction apparatus, the moving speed or moving angular speed of the lens of the image-taking apparatus may be generated by zooming, panning, or tilting of the image-taking apparatus.

According to this configuration, the moving speed or moving angular speed of the lens of the image-taking apparatus, which is generated by the zooming, panning, or tilting of the image-taking apparatus, can be utilized.

According to another aspect of the present disclosure, an image data extraction method includes: acquiring moving image data from an image-taking apparatus disposed in a movable body; acquiring movement information regarding a movement of at least either the movable body or the image-taking apparatus; and extracting learning image data that is used in learning of an identifier that identifies a physical object in an image.

According to this configuration, the moving image data is acquired from the image-taking apparatus disposed in the movable body. The information regarding the movement of at least either the movable body or the image-taking apparatus is acquired. The learning image data is extracted from the moving image data on the basis of the movement information.

Therefore, image data in which a physical object is highly likely to be contained is extracted on the basis of the movement information. This makes it possible to increase variations of learning data and reduce annotation processing.

According to another aspect of the present disclosure, an image data extraction method includes: acquiring moving image data from a fixed image-taking apparatus; calculating an image variation of each pixel between each frame of the moving image data and a previous frame; and extracting learning image data that is used in learning of an identifier that identifies a physical object in an image.

According to this configuration, the moving image data is acquired from the fixed image-taking apparatus. The image variation of each pixel between each frame of the moving image data and the previous frame is calculated. The learning image data is extracted from the moving image data on the basis of the image variation thus calculated.

Therefore, the learning image data is extracted from the moving image data in a case where an image has changed. This makes it possible to increase variations of learning data and reduce annotation processing.

Embodiments of the present disclosure are described in detail below with reference to the accompanying drawings. It should be noted the embodiments described below are merely specific examples of the present disclosure and are not intended to limit the technical scope of the present disclosure.

### Embodiment 1

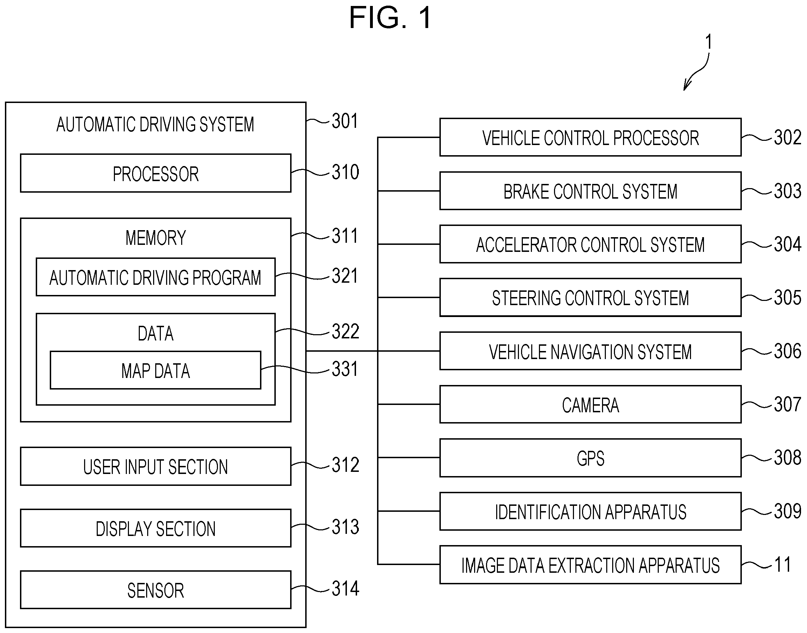

Fig. 1 is a block diagram showing a configuration of a self-guided vehicle 1 according to Embodiment 1. As shown in Fig. 1, the self-guided vehicle 1 includes an automatic driving system 301, a vehicle control processor 302, a brake control system 302, an accelerator control system 304, a steering control system 305, a vehicle navigation system 306, a camera 307, a GPS (global positioning system) 308, an identification apparatus 309, and an image data extraction apparatus 11.

The self-guided vehicle 1 is a vehicle that autonomously travels. In Embodiment 1, the self-guided vehicle 1 is an automobile. However, the present disclosure is not particularly limited to this, and the self-guided vehicle 1 may be any of various types of vehicle such as a motorcycle, a truck, a bus, a train, and a flight vehicle.

The automatic driving system 301 includes a processor 310, a memory 311, an user input section 312, a display section 313, and a sensor 314.

The memory 311 is a computer-readable storage medium. Examples of the memory 311 include a hard disk drive, a ROM (read-only memory), a RAM (random access memory), an optical disk, a semiconductor memory, and the like. The memory 311 stores an automatic driving program 321 and data 322. The data 322 includes map data 331. The map data 331 includes topographical information, lane information indicating traffic lanes, intersection information regarding intersections, speed limit information indicating speed limits, and the like. It should be noted that the map data 331 is not limited to the information named above.

The processor 310 is for example a CPU (central processing unit) and executes the automatic driving program 321 stored in the memory 311. The execution of the automatic driving program 321 by the processor 310 allows the self-guided vehicle 1 to autonomously travel. Further, the processor 310 reads out the data 322 from the memory 311, writes the data 322 into the memory 311, and updates the data 322 stored in the memory 311.

The user input section 312 accepts various types of information input from a user. The display section 313 displays various types of information. The sensor 314 measures the environment around the self-guided vehicle 1 and the environment inside the self-guided vehicle 1. The sensor 314 includes, for example, a speedometer that measures the speed of the self-guided vehicle 1, an accelerometer that measures the acceleration of the self-guided vehicle 1, a gyroscope that measures the orientation of the self-guided vehicle 1, an engine temperature sensor, and the like. It should be noted that the sensor 314 is not limited to the sensors named above.

The vehicle control processor 302 controls the self-guided vehicle 1. The brake control system 303 controls the self-guided vehicle 1 to decelerate. The accelerator control system 304 controls the speed of the self-guided vehicle 1. The steering control system 305 adjusts the direction in which the self-guided vehicle 1 travels. The vehicle navigation system 306 determines and presents a route for the self-guided vehicle 1.

The camera 307 is an example of an image-taking apparatus. The camera 307 is disposed near a rearview mirror of the self-guided vehicle 1. The camera 307 takes an image of the area in front of the self-guided vehicle 1. It should be noted that the camera 307 may take images of the area around the self-guided vehicle 1, such as the area behind the self-guided vehicle 1, the area on the right of the self-guided vehicle 1, and the area on the left of the self-guided vehicle 1, as well as the area in front of the self-guided vehicle 1. The GPS 308 acquires the current position of the self-guided vehicle 1.

The identification apparatus 309 uses an identifier to identify a physical object from image data captured by the camera 307 and outputs an identification result. The processor 310 controls the autonomous driving of the self-guided vehicle 1 on the basis of the identification result outputted by the identification apparatus 309. For example, in a case where the physical object is a pedestrian, the identification apparatus 309 identifies a pedestrian from image data captured by the camera 307 and outputs an identification result. In a case where a pedestrian has been identified from the image data, the processor 310 controls the autonomous driving of the self-guided vehicle 1 on the basis of the identification result outputted by the identification apparatus 309, in order that the self-guided vehicle 1 avoids the pedestrian.

It should be noted that the identification apparatus 309 may identify, from image data, an object outside the vehicle such as another vehicle, an obstacle on the road, a traffic signal, a road sign, a traffic lane, or a tree, as well as a pedestrian.

The processor 310 controls the direction and speed of the self-guided vehicle 1 on the basis of a sensing result outputted by the sensor 314 and an identification result outputted by the identification apparatus 309. The processor 310 accelerates the self-guided vehicle 1 through the accelerator control system 304, decelerates the self-guided vehicle 1 through the brake control system 303, and changes the direction of the self-guided vehicle 1 through the steering control system 305.

The image data extraction apparatus 11 extracts, from moving image data, learning image data that is used in learning of an identifier that identifies a physical object in an image. The image data extraction apparatus 11 extracts, from moving image data captured by the camera 307, learning image data that is used in learning of the identifier that is used by the identification apparatus 309.

It should be noted that although, in Embodiment 1, the self-guided vehicle 1 includes the image data extraction apparatus 11, the present disclosure is not limited to this, and a vehicle that a driver drives may include the image data extraction apparatus 11.

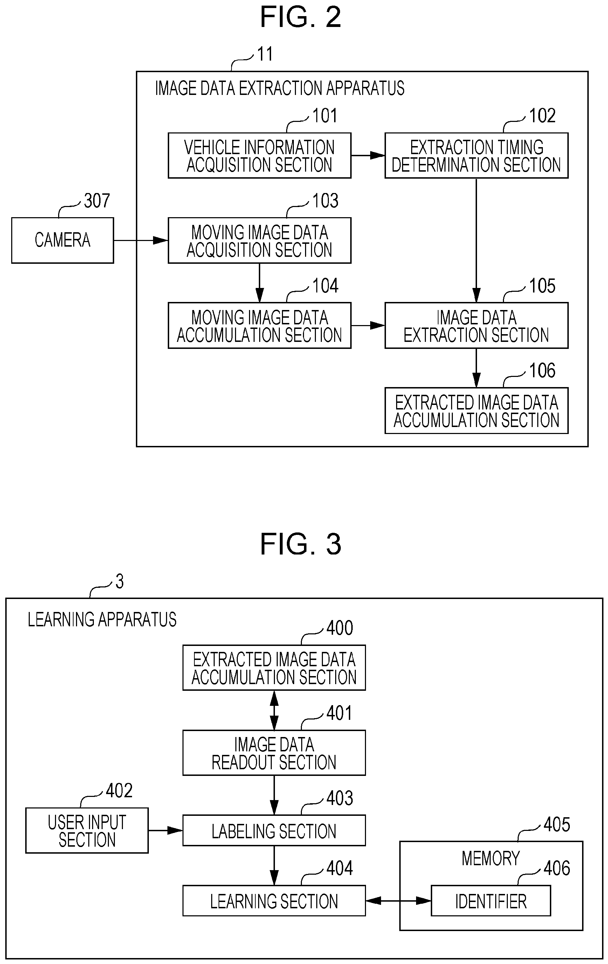

Fig. 2 is a block diagram showing a configuration of the image data extraction apparatus 11 according to Embodiment 1. As shown in Fig. 2, the image data extraction apparatus 11 includes a vehicle information acquisition section 101, an extraction timing determination section 102, a moving image data acquisition section 103, a moving image data accumulation section 104, an image data extraction section 105, and an extracted image data accumulation section 106.

The vehicle information acquisition section 101 acquires vehicle information regarding the movement of the self-guided vehicle 1. The extracting timing determination section 102 determines the timing of extraction of learning image data from moving image data on the basis of the vehicle information acquired by the vehicle information acquisition section 101.

The moving image data acquisition section 103 acquires moving image data from the camera disposed in the movable self-guided vehicle 1. The moving image data accumulation section 104 accumulates the moving image data acquired by the moving image data acquisition section 103.

In accordance with the timing determined by the extraction timing determination section 102, the image data extraction section 105 extracts learning image data from the moving image data accumulated in the moving image data accumulation section 104. The extracted image data accumulation section 106 accumulates the learning image data extracted by the image data extraction section 105.

The vehicle information includes, for example, the moving speed of the self-guided vehicle 1. In this case, the image data extraction section 105 extracts the learning image data from the moving image data on the basis of the moving speed. That is, in a case where the moving speed is equal to or higher than a predetermined speed, the image data extraction section 105 extracts the learning image data from the moving image data at first frame intervals, and in a case where the moving speed is lower than the predetermined speed, the image data extraction section 105 extracts the learning image data from the moving image data at second frame intervals that are longer than the first frame intervals.

Further, the vehicle information may include, for example, the acceleration of the self-guided vehicle 1. In this case, the image data extraction section 105 may extract the learning image data from the moving image data on the basis of the acceleration. That is, the image data extraction section 105 may determine whether the acceleration is equal to or higher than a predetermined acceleration, and in a case where the image data extraction section 105 has determined that the acceleration is equal to or higher than the predetermined acceleration, the image data extraction section 105 may extract the learning image data from the moving image data, and in a case where the image data extraction section 105 has determined that the acceleration is lower than the predetermined acceleration, the image data extraction section 105 may not extract the learning image data from the moving image data.

Further, the vehicle information may include, for example, the steering angle of the self-guided vehicle 1. The image data extraction section 105 may extract the learning image data from the moving image data on the basis of the steering angle. That is, the image data extraction section 105 may determine whether the steering angle is equal to or larger than a predetermined angle, and in a case where the image data extraction section 105 has determined that the steering angle is equal to or higher than the predetermined angle, the image data extraction section 105 may extract the learning image data from the moving image data, and in a case where the image data extraction section 105 has determined that the steering angle is smaller than the predetermined angle, the image data extraction section 105 may not extract the learning image data from the moving image data.

The following describes a configuration of a learning apparatus according to Embodiment 1.

Fig. 3 is a block diagram showing a configuration of a learning apparatus 3 according to Embodiment 1. The learning apparatus 3 is constituted, for example, by a personal computer and generates an identifier that identifies a physical object in image data. The learning apparatus 3 includes an extracted image data accumulation section 400, an image data readout section 401, a user input section 402, a labeling section 403, a learning section 404, and a memory 405.

The extracted image data accumulation section 400 accumulates learning image data accumulated by the image data extraction apparatus 11. It should be noted that the self-guided vehicle 1 and the learning apparatus 3 are communicably connected to each other via a network, that the self-guided vehicle 1 has a communication section (not illustrated) that transmits, to the learning apparatus 3, the learning image data accumulated in the extracted image data accumulation section 106 of the image data extraction apparatus 11, and that the learning apparatus 3 has a communication section (not illustrated) that stores the received learning image data in the extracted image data accumulation section 400. It should be noted that the learning image data accumulated in the extracted image data accumulation section 106 of the image data extraction apparatus 11 may be stored in a portable storage medium such as a USB (universal serial bus) flash drive or a memory card and the learning apparatus 3 may read out the learning image data from the portable storage medium and store the learning image data in the extracted image data accumulation section 400.

The image data readout section 401 reads out the learning image data from the extracted image data accumulation section 400.

The user input section 402 is constituted, for example, by a user interface such as a touch panel or a keyboard and accepts the inputting by the user of a correct label that indicates a physical object that an identifier identifies. For example, if the physical object is a pedestrian, the user input section 402 accepts the inputting of a correct label that indicates a pedestrian. It should be noted that correct labels are used in machine learning.

The labeling section 403 performs annotation processing in which the correct label inputted by the user input section 402 is attached to the learning image data read out from the extracted image data accumulation section 400.

The learning section 404 inputs the learning image data to a predetermined model, learns information indicating a feature of the physical object, and applies, to the predetermined model, the information indicating the feature of the physical object. The learning section 404 learns the learning image data through deep learning, which is a type of machine learning. It should be noted that deep learning is not described here, as it is a common technique.

The memory 405 stores an identifier generated by the learning section 404. The memory 405 stores an identifier 406. The identifier 406 is used by the identification apparatus 309 of the self-guided vehicle 1. The identifier 406 may be transmitted to the self-guided vehicle 1 via the network.

It should be noted that, in Embodiment 1, the self-guided vehicle 1 may include the learning apparatus 3.

The following describes the operation of the image data extraction apparatus 11 according to Embodiment 1.

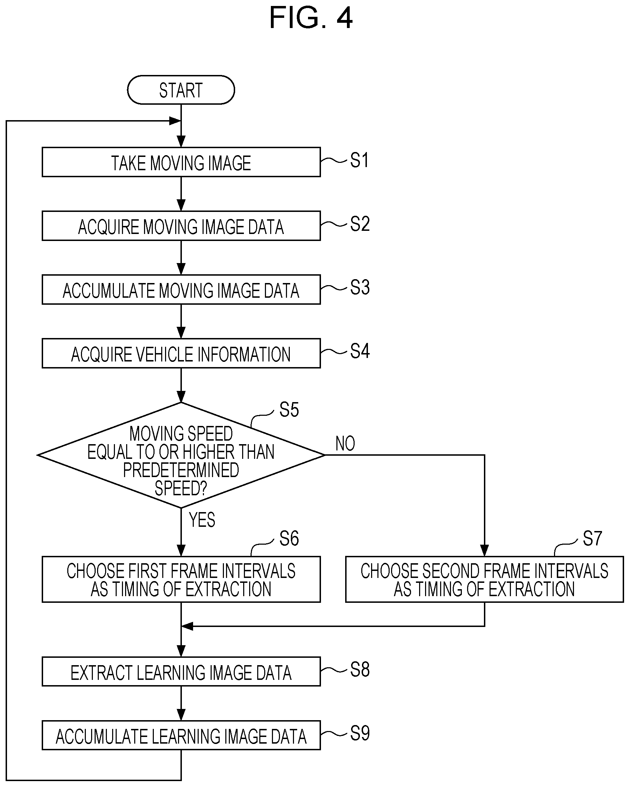

Fig. 4 is a flow chart for explaining the operation of the image data extraction apparatus 11 according to Embodiment 1.

First, in step S1, the camera 307 takes a moving image.

Next, in step S2, the moving image data acquisition section 103 acquires moving image data captured by the camera 307.

Next, in step S3, the moving image acquisition section 103 accumulates the moving image data thus acquired in the moving image data accumulation section 104.

Next, in step S4, the vehicle information acquisition section 101 acquires vehicle information regarding the movement of the self-guided vehicle 1. Note here that the vehicle information includes the moving speed of the self-guided vehicle 1.

Next, in step S5, the extraction timing determination section 102 determines whether the moving speed of the self-guided vehicle 1 is equal to or higher than the predetermined speed.

In a case where the extraction timing determination section 102 has determined here that the moving speed of the self-guided vehicle 1 is equal to or higher than the predetermined speed (YES in step S5), the extraction timing determination section 102 proceeds to step S6, in which the extraction timing determination section 102 chooses the first frame intervals as the timing of extraction of learning image data from the moving image data.

On the other hand, in a case where the extraction timing determination section 102 has determined that the moving speed of the self-guided vehicle 1 is lower than the predetermined speed (NO in step S5), the extraction timing determination section 102 proceeds to step S7, in which the extraction timing determination section 102 chooses the second frame intervals, which are longer than the first frame intervals, as the timing of extraction of learning image data from the moving image data.

Next, in step S8, in accordance with the timing determined by the extraction timing determination section 102, the image data extraction section 105 extracts learning image data from the moving image data accumulated in the moving image data accumulation section 104. In a case where the first frame intervals were chosen as the timing of extraction, the image data extraction section 105 extracts the learning image data from the moving image data at the first frame intervals. In a case where the second frame intervals were chosen as the timing of extraction, the image data extraction section 105 extracts the learning image data from the moving image data at the second frame intervals.

Next, in step S9, the image data extraction section 105 accumulates the learning image data thus extracted in the extracted image data accumulation section 106. Then, the process returns to step S1, and the process from step S1 to step S9 is repeated until the taking of the moving image ends.

Thus, in a case where the self-guided vehicle 1 is moving at a high speed, variations of learning image data can be increased by increasing the frequency of extraction of learning image data and thereby increasing the number of pieces of learning image data to be acquired. Further, in a case where the self-guided vehicle 1 is moving at a low speed, the same learning image data can be reduced by decreasing the frequency of extraction of learning image data and thereby reducing the number of pieces of learning image data to be acquired, so that annotation processing can be reduced.

The following describes the operation of the learning apparatus 3 according to Embodiment 1.

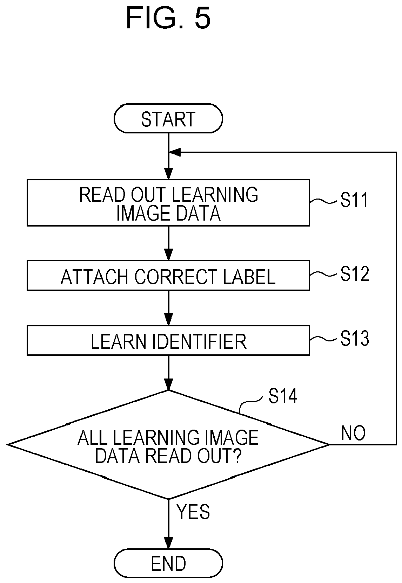

Fig. 5 is a flow chart for explaining the operation of the learning apparatus 3 according to Embodiment 1.

First, in step S11, the image data readout section 401 reads out learning image data from the extracted image data accumulation section 400.

Next, in step S12, the labeling section 403 attaches, to the learning image data read out by the image data readout section 401, a correct label, inputted by the user input section 402, which indicates a physical object that an identifier identifies.

Next, in step S13, the learning section 404 inputs the learning image data to a neural network model, learns weight information indicating a feature of the physical object, and applies, to the neural network model, the weight information indicating the feature of the physical object.

Next, in step S14, the image data readout section 401 determines whether it has read out all learning image data from the extracted image data accumulation section 400. In a case where the image data readout section 401 has determined here that it has read out all learning image data (YES in step S14), the process is ended. On the other hand, in a case where the image data readout section 401 has determined that it has not read out all learning image data (NO in step S14), the process returns to step S11.

### Embodiment 2

The following describes an image data extraction apparatus according to Embodiment 2.

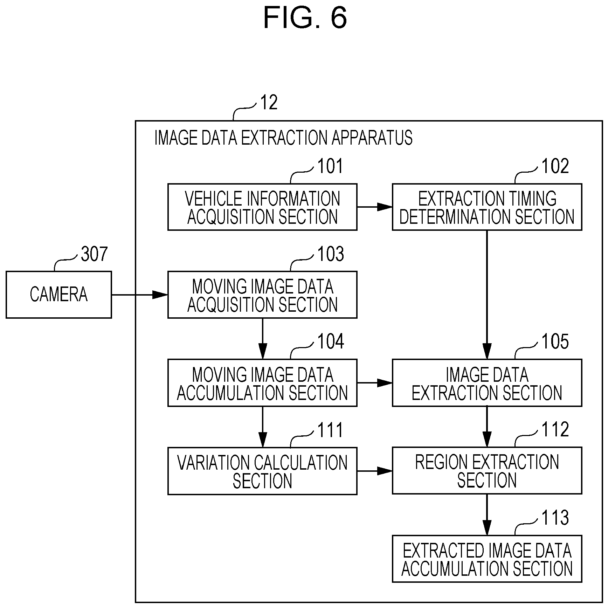

Fig. 6 is a block diagram showing a configuration of an image data extraction apparatus 12 according to Embodiment 2. It should be noted that a configuration of a self-guided vehicle in Embodiment 2 is the same as the configuration of the self-guided vehicle 1 in Embodiment 1. The self-guided vehicle 1 includes the image data extraction apparatus 12 shown in Fig. 6 in place of the image data extraction apparatus shown in Fig. 1. Further, a configuration of a learning apparatus in Embodiment 2 is the same as the configuration of the learning apparatus 3 in Embodiment 1.

As shown in Fig. 6, the image data extraction apparatus 12 includes a vehicle information acquisition section 101, an extraction timing determination section 102, a moving image data acquisition section 103, a moving image data accumulation section 104, an image data extraction section 105, a variation calculation section 111, a region extraction section 112, and an extracted image data accumulation section 113. It should be noted that those components of Embodiment 2 which are the same as those of Embodiment 1 are given the same reference numerals and are not described below.

The variation calculation section 111 calculates a first image variation of each pixel between extracted learning image data and the first learning image data extracted previous to the extracted learning image data and calculates a second image variation of each pixel between the first learning image data extracted previous to the extracted learning image data and the second learning image data extracted previous to the extracted learning image data.

The first image variation is a movement vector (optical flow) that indicates which pixel of the extracted learning image data each pixel of the first learning image data extracted previous to the extracted learning image data has moved to. Further, the second image variation is a movement vector (optical flow) that indicates which pixel of the first learning image data extracted previous to the extracted learning image data each pixel of the second learning image data extracted previous to the extracted learning image data has moved to.

The variation calculation section 111 calculates the movement vector of each pixel of the extracted learning image data and the movement vector of each pixel of the first learning image data extracted previous to the extracted learning image data.

The region extraction section 112 extracts, as new learning image data from the extracted learning image data, a region constituted by pixels that vary in value between the first image variation and the second image variation. The region extraction section 112 makes a comparison between the movement vector of each pixel of the extracted learning image data and the movement vector of each pixel of the first learning image data extracted previous to the extracted learning image data and extracts a region constituted by pixels whose movement vectors vary in magnitude or orientation.

The extracted image data accumulation section 113 accumulates, as learning image data, the region extracted by the region extraction section 112.

The following describes the operation of the image data extraction apparatus 12 according to Embodiment 2.

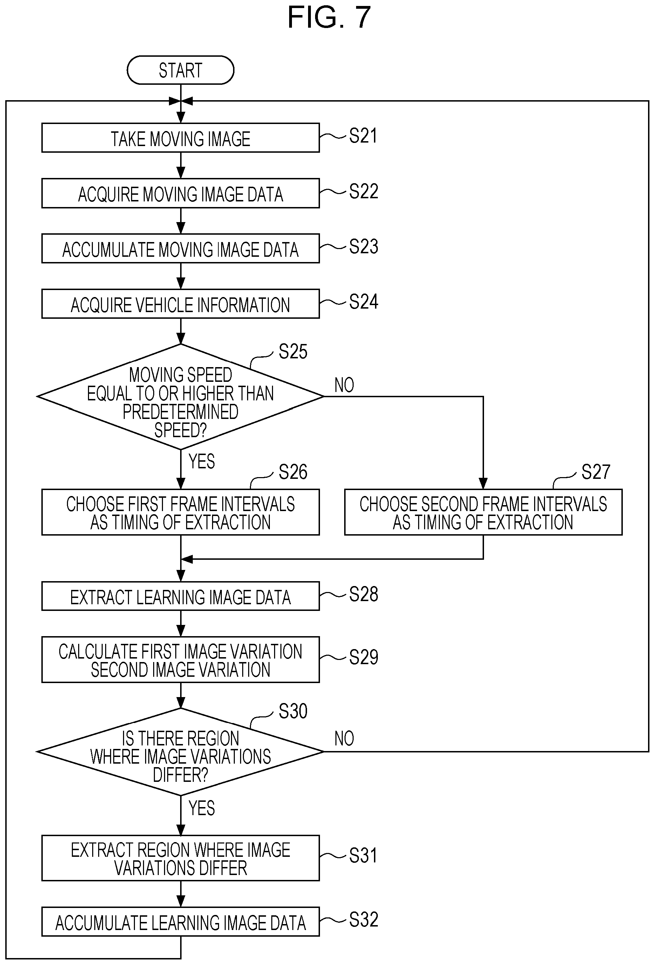

Fig. 7 is a flow chart for explaining the operation of the image data extraction apparatus 12 according to Embodiment 2.

It should be noted that the process from step S21 to step S28 shown in Fig. 7 is not described below, as it is the same as the process from step S1 to step S8 shown in Fig. 4.

Next, in step S29, the variation calculation section 111 calculates a first image variation between extracted learning image data and the first learning image data extracted previous to the extracted learning image data and calculates a second image variation between the first learning image data extracted previous to the extracted learning image data and the second learning image data extracted previous to the extracted learning image data.

Next, in step S30, the region extraction section 112 makes a comparison between the first and second image variations thus calculated and determines whether there is a region where the image variations differ from each other. In a case where the region extraction section 112 has determined here that there is no region where the image variations differ from each other (NO in step S30), the process returns to step S21.

On the other hand, in a case where the region extraction section 112 has determined that there is a region where the image variations differ from each other (YES in step S30), the region extraction section 112 proceeds to step S31, in which the region extraction section 112 extracts, from the extracted learning image data, the region where the image variations differ from each other.

Next, in step S32, the region extraction section 112 accumulates the region thus extracted as learning image data in the extracted image data accumulation section 113. Then, the process returns to step S21, and the process from step S21 to step S32 is repeated until the taking of the moving image ends.

This makes it possible to reduce the amount of data that is accumulated, as image data extracted from moving image data is not accumulated as learning image data without being processed but, of the image data extracted from the moving image data, only a region of variation from the previously extracted image data is accumulated as learning image data.

### Embodiment 3

The following describes an image data extraction apparatus according to Embodiment 3.

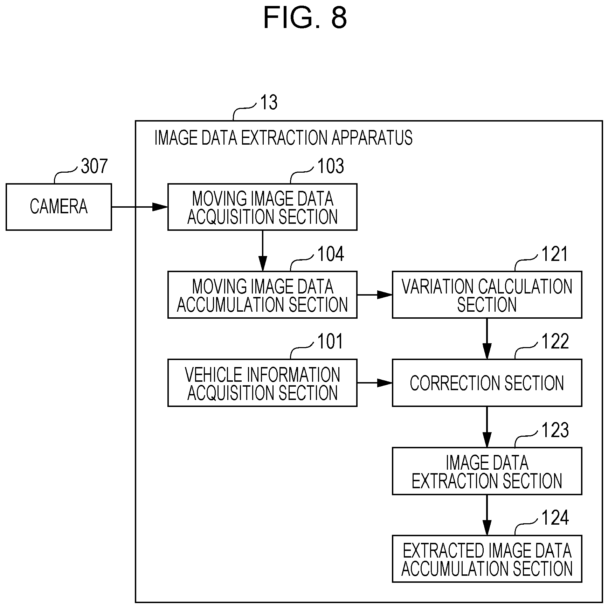

Fig. 8 is a block diagram showing a configuration of an image data extraction apparatus 13 according to Embodiment 3. It should be noted that a configuration of a self-guided vehicle in Embodiment 3 is the same as the configuration of the self-guided vehicle 1 in Embodiment 1. The self-guided vehicle 1 includes the image data extraction apparatus 13 shown in Fig. 8 in place of the image data extraction apparatus shown in Fig. 1. Further, a configuration of a learning apparatus in Embodiment 3 is the same as the configuration of the learning apparatus 3 in Embodiment 1.

As shown in Fig. 8, the image data extraction apparatus 13 includes a vehicle information acquisition section 101, a moving image data acquisition section 103, a moving image data accumulation section 104, a variation calculation section 121, a correction section 122, an image data extraction section 123, and an extracted image data accumulation section 124. It should be noted that those components of Embodiment 3 which are the same as those of Embodiments 1 and 2 are given the same reference numerals and are not described below.

The vehicle information acquisition section 101 acquires vehicle information including the moving speed of the self-guided vehicle 1.

The variation calculation section 121 calculates an image variation of each pixel between each frame of moving image data and a previous frame. The image variation is a movement vector (optical flow) that indicates which pixel of a first frame of the moving image data each pixel of a second frame immediately preceding the first frame has moved to. The variation calculation section 121 calculates the movement vector of each pixel of each frame of the moving image data.

The correction section 122 corrects an image variation according to the moving speed. The correction section 122 corrects an image variation in each frame of image data according to a variation in the moving speed that occurred when that frame of image data was acquired. The image variation represents the movement vector of an object in the image data. This makes it possible to find the amount of movement of the self-guided vehicle 1 during the frame from the moving speed of the self-guided vehicle 1 and, by subtracting the amount of movement of the self-guided vehicle 1 from the amount of movement of the object in the image data, calculate the actual amount of movement of the object in the image data.

The image data extraction section 123 extracts learning image data from the moving image data in a case where the sum of image variations corrected is equal to or larger than a predetermined value.

The extracted image data accumulation section 124 accumulates the learning image data extracted by the image data extraction section 123.

The following describes the operation of the image data extraction apparatus 13 according to Embodiment 3.

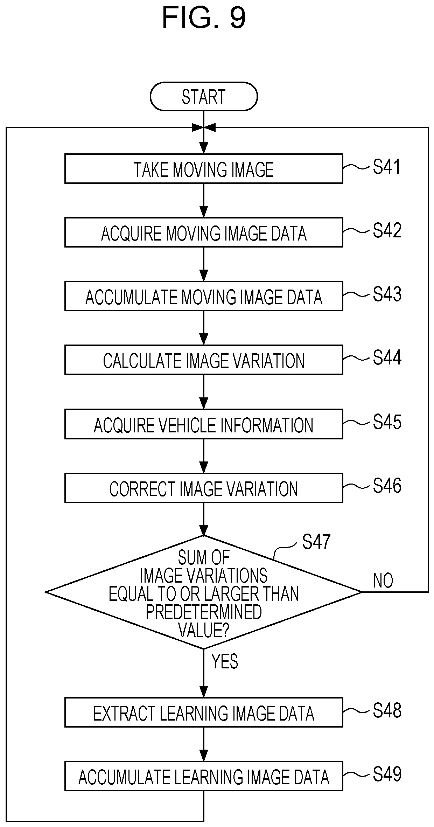

Fig. 9 is a flow chart for explaining the operation of the image data extraction apparatus 13 according to Embodiment 3.

It should be noted that the process from step S41 to step S43 shown in Fig. 9 is not described below, as it is the same as the process from step S1 to step S3 shown in Fig. 4.

Next, in step S44, the variation calculation section 121 calculates an image variation of each pixel between the current frame of image data of acquired moving image data and the first frame of image data previous to the current frame.

Next, in step S45, the vehicle information acquisition section 101 acquires vehicle information regarding the movement of the self-guided vehicle 1. Note here that the vehicle information includes the moving speed of the self-guided vehicle 1.

Next, in step S46, the correction section 122 corrects the image variation according to the moving speed. That is, the correction section 122 corrects the image variation of each pixel by subtracting a variation corresponding to the moving speed of the self-guided vehicle 1 from the image variation of each pixel in the current frame of image data of the acquired moving image data.

Next, in step S47, the image data extraction section 123 determines whether the sum of image variations of all pixels in the current frame of image data is equal to or larger than the predetermined value. In a case where the image data extraction section 123 has determined here that the sum of the image variations is smaller than the predetermined value (NO in step S47), the process returns to step S41.

On the other hand, in a case where the image data extraction section 123 has determined that the sum of the image variations is equal to or larger than the predetermined value (YES in step S47), the image data extraction section 123 proceeds to step S48, in which the image data extraction section 123 extracts the current frame of image data as learning image data.

Next, in step S49, the image data extraction section 123 accumulates the learning image data thus extracted in the extracted image data accumulation section 124. Then, the process returns to step S41, and the process from step S41 to step S49 is repeated until the taking of the moving image ends.

This makes it possible to find the amount of movement of the self-guided vehicle 1 during the frame from the moving speed of the self-guided vehicle 1 and, by subtracting the amount of movement of the self-guided vehicle 1 from the amount of movement of the object in the image data, calculate the actual amount of movement of the object in the image data.

### Embodiment 4

The following describes an image data extraction apparatus according to Embodiment 4.

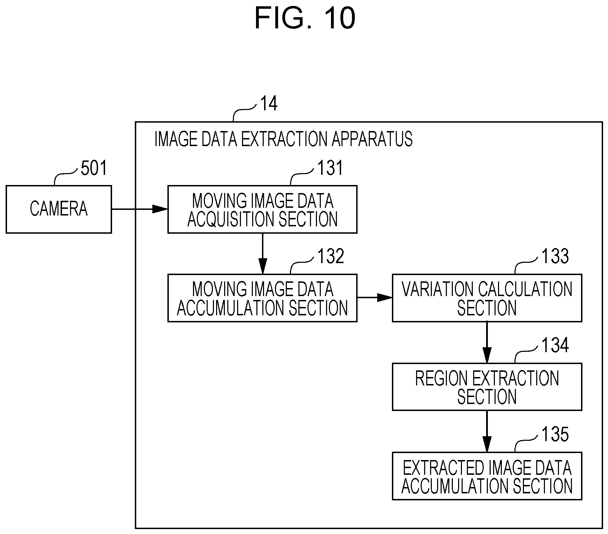

Fig. 10 is a block diagram showing a configuration of an image data extraction apparatus 14 according to Embodiment 4. It should be noted that a configuration of a learning apparatus in Embodiment 4 is the same as the configuration of the learning apparatus 3 in Embodiment 1.

As shown in Fig. 10, the image data extraction apparatus 14 includes a moving image data acquisition section 131, a moving image data accumulation section 132, a variation calculation section 133, a region extraction section 134, and an extracted image data accumulation section 135.

A camera 501 is for example a surveillance camera and takes an image of a predetermined place. The camera 501 is fixed in place.

The moving image data acquisition section 131 acquires moving image data from the fixed camera 501.

The moving image data accumulation section 132 accumulates the moving image data acquired by the moving image data acquisition section 131.

The variation calculation section 133 calculates an image variation of each pixel between each frame of the moving image data and a previous frame. The image variation is a movement vector (optical flow) that indicates which pixel of a first frame of the moving image data each pixel of a second frame immediately preceding the first frame has moved to. The variation calculation section 133 calculates the movement vector of each pixel of each frame of the moving image data.

The region extraction section 134 extracts learning image data from the moving image data on the basis of the image variations thus calculated. The region extraction section 134 extracts a region constituted by pixels whose image variations are equal to or larger than a representative value of the whole image data. It should be noted that the representative value is for example the mean of image variations of all pixels of one frame of image data, the minimum value of image variations of all pixels of one frame of image data, the median of image variations of all pixels of one frame of image data, or the mode of image variations of all pixels of one frame of image data. The region extraction section 134 makes a comparison between the image variation (movement vector) of each pixel of the image data and the representative value of image variations (movement vectors) of all pixels of the image data and extracts a region constituted by pixels whose image variations (movement vectors) are equal to or larger than the representative value.

The extracted image data accumulation section 135 accumulates the learning image data extracted by the region extraction section 134. The region extraction section 134 accumulates the region thus extracted as learning image data in the extracted image data accumulation section 135.

The following describes the operation of the image data extraction apparatus 14 according to Embodiment 4.

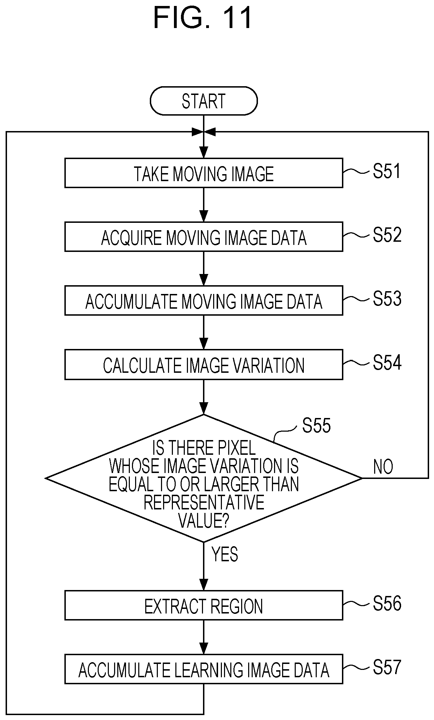

Fig. 11 is a flow chart for explaining the operation of the image data extraction apparatus 14 according to Embodiment 4.

First, in step S51, the camera 501 takes a moving image.

Next, in step S52, the moving image data acquisition section 131 acquires moving image data captured by the camera 501.

Next, in step S53, the moving image data acquisition section 131 accumulates the moving image data thus acquired in the moving image data accumulation section 132.

Next, in step S54, the variation calculation section 133 calculates an image variation of each pixel between the current frame of image data of the moving image data thus acquired and the first frame of image data previous to the current frame.

Next, in step S55, the region extraction section 134 determines whether there is a pixel whose image variation is equal to or larger than the representative value of the whole image data. In a case where the region extraction section 134 has determined here that there is no pixel whose image variation is equal to or larger than the representative value (NO in step S55), the process returns to step S51.

On the other hand, in a case where the region extraction section 134 has determined that there is a pixel whose image variation is equal to or larger than the representative value (YES in step S55), the region extraction section 134 proceeds to step S56, in which the region extraction section 134 extracts a region constituted by pixels whose image variations are equal to or larger than the representative value of the whole image data.

Next, in step S57, the region extraction section 134 accumulates the region thus extracted as learning image data in the extracted image data accumulation section 135. Then, the process returns to step S51, and the process from step S51 to step S57 is repeated until the taking of the moving image ends.

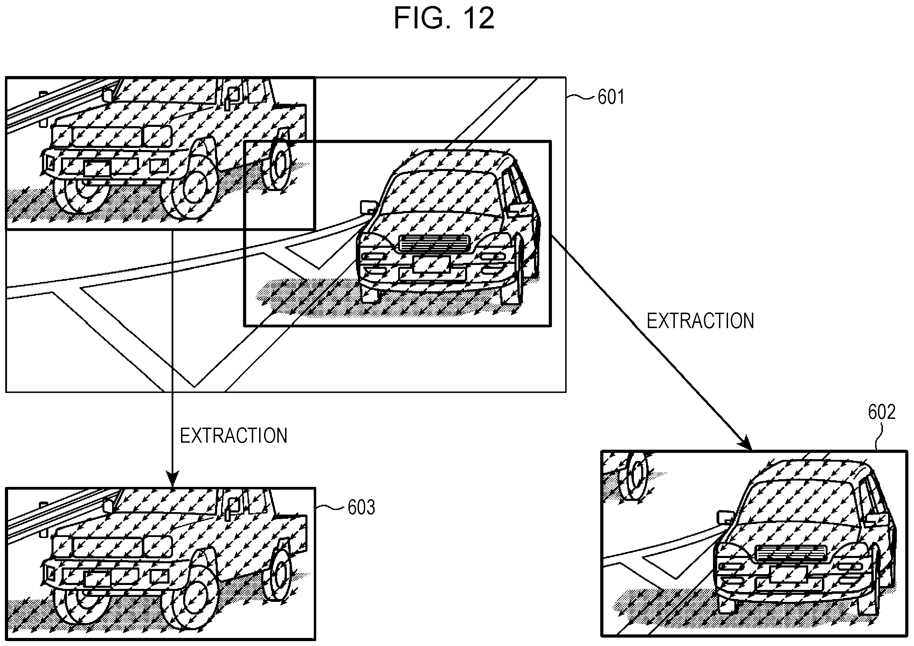

Fig. 12 is a schematic view for explaining a region extraction process that is performed by the image data extraction apparatus 14 according to Embodiment 4. Fig. 12 shows image data 601 captured by the fixed camera 501 taking an image of two automobiles. The arrows in Fig. 12 indicate the movement vectors of pixels in the image data 601. Since the two automobiles are moving, the directions of the movement vectors are the same the directions in which the automobiles travel.

The variation calculation section 133 calculates the movement vector of each pixel of the current frame of the image data 601 of the acquired moving image data and of the first frame of image data previous to the current frame. Since the movement vector of an image showing an automobile is equal to or larger than the representative value of the whole image data, regions 602 and 603 each containing an automobile are extracted from the image data 601. It should be noted that, in Embodiment 4, the shapes of the regions 602 and 603 are rectangular shapes each containing pixels whose movement vectors are equal to or larger than the representative value of the whole image data. The shapes of the regions 602 and 603 are not limited to rectangular shapes.

In the case of such a change in image data, the image data is extracted as learning image data. This makes it possible to increase variations of learning image data. Further, in the case of no change in image data, the image data is not extracted as learning image data. This makes it possible to reduce the number of pieces of learning image data to be acquired and thereby reduce annotation processing.

It should be noted that although Embodiment 4 extracts a region constituted by pixels whose image variations are equal to or larger than the representative value of the whole image data, the present disclosure is not particularly limited to this, and in a case where it has been determined whether the sum of image variations of all pixels of image data is equal to or larger than the predetermined value and it has been determined the sum of the image variations is equal to or larger than the predetermined value, the image data may be extracted as learning image data.

### Embodiment 5

The following describes an image data extraction apparatus according to Embodiment 5.

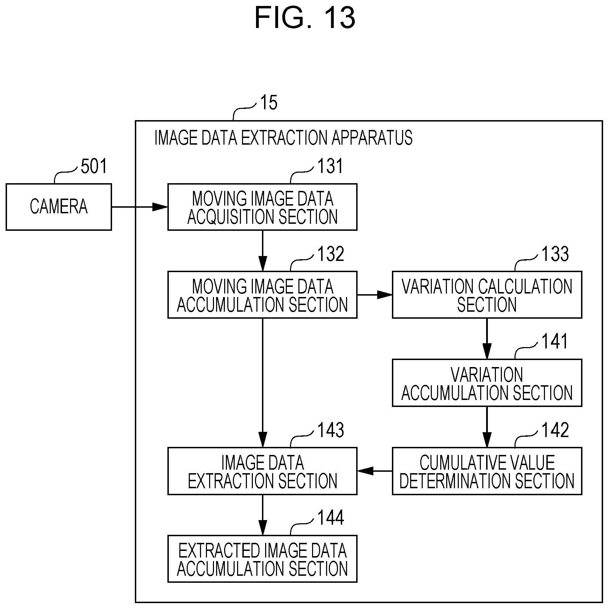

Fig. 13 is a block diagram showing a configuration of an image data extraction apparatus 15 according to Embodiment 5. It should be noted that a configuration of a learning apparatus in Embodiment 4 is the same as the configuration of the learning apparatus 3 in Embodiment 1.

As shown in Fig. 13, the image data extraction apparatus 15 includes a moving image data acquisition section 131, a moving image data accumulation section 132, a variation calculation section 133, a variation accumulation section 141, a cumulative value determination section 142, an image data extraction section 143, and an extracted image data accumulation section 144. It should be noted that those components of Embodiment 5 which are the same as those of Embodiment 4 are given the same reference numerals and are not described below.

The variation accumulation section 141 accumulates the sum of image variations of pixels as calculated by the variation calculation section 133.

The cumulative value determination section 142 determines whether a cumulative value of the sum of the image variations is equal to or larger than a predetermined value.

In a case where the cumulative value determination section 142 has determined that the cumulative value of the sum of the image variations is equal to or larger than the predetermined value, the image data extraction section 143 extracts, as learning image data, image data corresponding to the sum of image variations as accumulated when it was determined that the cumulative value is equal to or larger than the predetermined value.

The extracted image data accumulation section 144 accumulates the learning image data extracted by the image data extraction section 143.

The following describes the operation of the image data extraction apparatus 15 according to Embodiment 5.

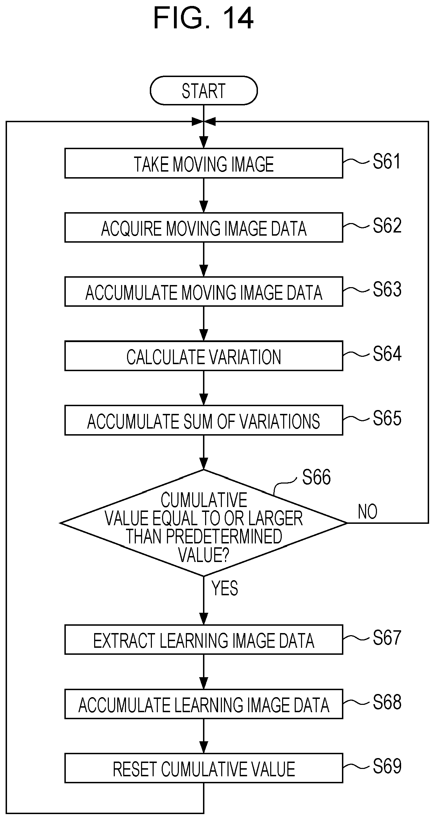

Fig. 14 is a flow chart for explaining the operation of the image data extraction apparatus 15 according to Embodiment 5.

It should be noted that the process from step S61 to step S64 shown in Fig. 14 is not described below, as it is the same as the process from step S51 to step S54 shown in Fig. 11.

Next, in step S65, the variation calculation section 141 accumulates the sum of image variations of pixels as calculated by the variation calculation section 133. That is, the variation calculation section 141 adds, to the cumulative value, the sum of image variations of pixels as calculated by the variation calculation section 133.

Next, in step S66, the cumulative value determination section 142 determines whether the cumulative value of the sum of the image variations is equal to or larger than the predetermined value. In a case where the cumulative value determination section 142 has determined here that the cumulative value is smaller than the predetermined value (NO in step S66), the process returns to step S61.

On the other hand, in a case where the cumulative value determination section 142 has determined that the cumulative value is equal to or larger than the predetermined value (YES in step S66), the process returns to step S67, in which the image data extraction section 143 extracts, as learning image data, image data corresponding to the sum of image variations as accumulated when it was determined that the cumulative value is equal to or larger than the predetermined value.

Next, in step S68, the image data extraction section 143 accumulates the learning image data thus extracted in the extracted image data accumulation section 144.

Next, in step S69, the variation accumulation section 141 resets the cumulative value. Then, the process returns to step S61, and the process from step S61 to step S69 is repeated until the taking of the moving image ends.

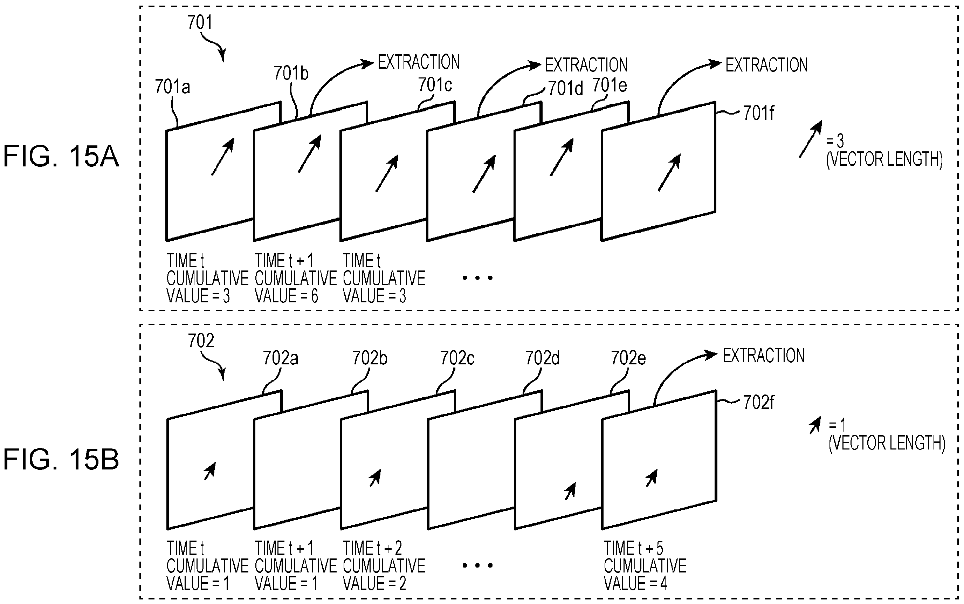

Figs. 15A and 15B are schematic views for explaining an image data extraction process that is performed by the image data extraction apparatus 15 according to Embodiment 5. Fig. 15A shows moving image data 701 composed of plural frames of image data 701 a to 701 f, and Fig. 15B shows moving image data 702 composed of plural frames of image data 702a to 702f. The sum of image variations of one frame is the sum of the vector lengths of movement vectors (optical flows) of one frame.

The length vectors of the movement vectors of the image data 701 a to 701 f are calculated as image variations, respectively. The sum of the respective movement vectors of the image data 701 a to 701 f is for example 3. Further, the cumulative value is compared with a predetermined value of 4. The cumulative value at time t is 3, and the cumulative value at time t+1 is 6. Since the cumulative value is equal to or larger than the predetermined value at time t+1, the image data 701 b, 701 d, and 701f are extracted from the moving image data 701.

Meanwhile, the length vectors of the movement vectors of the image data 702a to 702f are calculated as image variations, respectively. The sum of the respective movement vectors of the image data 702a, 702c, 702e, and 702f is for example 1, and the sum of the respective movement vectors of the image data 702b and 702d is for example 0. Further, the cumulative value is compared with a predetermined value of 4. The cumulative value at time t is 1, and the cumulative value at time t+1 is 1. Since the cumulative value is equal to or larger than the predetermined value at time t+5, the image data 702f is extracted from the moving image data 702.

Thus, in the case of larger image variations, more frames of image data are extracted, and in the case of smaller image variations, the number of pieces of image data to be extracted becomes smaller. This makes it possible to increase variations of learning data.

It should be noted that Embodiments 1 to 5 may identify a physical object in image data and extract, from moving image data, image data containing at least one such physical object.

Further, Embodiments 1 to 5 may identify an object that is highly likely to be taken an image of together with a physical object in image data and extract, from moving image data, image data containing at least one such physical object. In this case, for example, the physical object is a person, and the object is a bag possessed by the person.

Further, in each of Embodiments 1 to 5, the self-guided vehicle is an example of a movable body and may be another movable body such as an autonomous flight vehicle that autonomously flies or a robot that autonomously moves.

Further, in each of Embodiments 1 to 5, the image data extraction section may extract learning image data from moving image data on the basis of the moving speed or moving angular speed of a lens of the camera. That is, in a case where the moving speed or moving angular speed is equal to or higher than a predetermined speed or angular speed, the image data extraction section may extract the learning image data from the moving image data at first frame intervals, and in a case where the moving speed or moving angular speed is lower than the predetermined speed or angular speed, the image data extraction section may extract the learning image data from the moving image data at second frame intervals that are longer than the first frame intervals.

Further, in Embodiment 3, the correction section 122 may correct an image variation according to the moving speed or moving angular speed of the lens of the camera.

It should be noted that the moving speed or moving angular speed of the lens of the camera may be calculated on the basis of a relative movement of the camera with respect to the movement of a vehicle (movable body). Further, the moving speed or moving angular speed of the lens of the camera may be generated by the motion of the camera per se. Furthermore, the moving speed or moving angular speed of the lens of the camera may be generated by the zooming, panning, or tilting of the camera.

In the present disclosure, some or all of the units, apparatuses, members, or sections or some or all of the functional blocks of the block diagrams shown in the drawings may be executed by one or more electronic circuits including a semiconductor device, a semiconductor integrated circuit (IC), or an LSI (large-scale integration). The LSI or the IC may be integrated into one chip or may be constituted by a combination of chips. For example, the functional blocks excluding the storage elements may be integrated into one chip. The LSI and the IC as they are called here may be called by a different name such as system LSI, VLSI (very large scale integration), or ULSI (ultra large scale integration), depending on the degree of integration. A field programmable gate array (FPGA) that is programmed after the manufacture of the LSI or a reconfigurable logic device that can reconfigure the connections inside the LSI or set up circuit cells inside the LSI may be used for the same purposes.

Furthermore, some or all of the units, apparatuses, members, or sections or some or all of the functions or operations may be executed by software processing. In this case, software is stored in one or more non-transitory storage media such as ROMs, optical disks, or hard disk drives, and when the software is executed by a processor, a function specified by the software is executed by the processor and a peripheral apparatus. The system or the apparatus may include one or more non-transitory storage media in which software is stored, a processor, and a required hardware device such as an interface.

An image data extraction apparatus and an image data extraction method according to the present disclosure make it possible to increase variations of learning data and reduce annotation processing and are useful as an image data extraction apparatus and an image data extraction method for extracting, from moving image data, learning image data that is used in learning of an identifier that identifies a physical object in an image.

## Claims

1. An image data extraction apparatus comprising:
storage; and
circuitry that, in operation, performs operations including
acquiring moving image data from an image-taking apparatus disposed in a movable body,
acquiring movement information regarding a movement of at least either the movable body or the image-taking apparatus, and
extracting learning image data that is used in learning of an identifier that identifies a physical object in an image.

2. The image data extraction apparatus according to Claim 1, wherein the movement information includes a moving speed of the movable body, and
the extracting extracts the learning image data from the moving image data on the basis of the moving speed.

3. The image data extraction apparatus according to Claim 2, wherein in a case where the moving speed is equal to or higher than a predetermined speed, the extracting extracts the learning image data from the moving image data at first frame intervals, and
in a case where the moving speed is lower than the predetermined speed, the extracting extracts the learning image data from the moving image data at second frame intervals that are longer than the first frame intervals.

4. The image data extraction apparatus according to Claim 1, wherein the movement information includes an acceleration of the movable body, and
the extracting extracts the learning image data from the moving image data on the basis of the acceleration.

5. The image data extraction apparatus according to Claim 4, wherein the extracting determines whether the acceleration is equal to or higher than a predetermined acceleration,
in a case where the extracting has determined that the acceleration is equal to or higher than the predetermined acceleration, the extracting extracts the learning image data from the moving image data, and
in a case where the extracting has determined that the acceleration is lower than the predetermined acceleration, the extracting does not extract the learning image data from the moving image data.

6. The image data extraction apparatus according to Claim 1, wherein the movement information includes a steering angle of the movable body, and
the extracting extracts the learning image data from the moving image data on the basis of the steering angle.

7. The image data extraction apparatus according to Claim 6, wherein the extracting determines whether the steering angle is equal to or larger than a predetermined angle,
in a case where the extracting has determined that the steering angle is equal to or larger than the predetermined angle, the extracting extracts the learning image data from the moving image data, and
in a case where the extracting has determined that the steering angle is smaller than the predetermined angle, the extracting does not extract the learning image data from the moving image data.

8. The image data extraction apparatus according to Claim 1, wherein the operations further include
calculating a first image variation of each pixel between the learning image data thus extracted and first learning image data extracted previous to the learning image data thus extracted, and
calculating a second image variation of each pixel between the first learning image data extracted previous to the learning image data thus extracted and second learning image data extracted previous to the learning image data thus extracted.

9. The image data extraction apparatus according to Claim 1, wherein the movement information includes a moving speed of the movable body, and
the operations further include
calculating an image variation of each pixel between each frame of the moving image data and a previous frame, and
correcting the image variation according to the moving speed,
wherein the extracting extracts the learning image data from the moving image data in a case where a sum of the image variations thus corrected is equal to or larger than a predetermined value.

10. The image data extraction apparatus according to Claim 1, wherein the movement information regarding the movement of the image-taking apparatus includes a moving speed or moving angular speed of a lens of the image-taking apparatus, and
the extracting extracts the learning image data from the moving image data on the basis of the moving speed or the moving angular speed.

11. The image data extraction apparatus according to Claim 10, in a case where the moving speed or the moving angular speed is equal to or higher than a predetermined speed, the extracting extracts the learning image data from the moving image data at first frame intervals, and
in a case where the moving speed is lower than the predetermined speed, the extracting extracts the learning image data from the moving image data at second frame intervals that are longer than the first frame intervals.

12. The image data extraction apparatus according to Claim 1, wherein the movement information regarding the movement of the image-taking apparatus includes a moving speed or moving angular speed of a lens of the image-taking apparatus, and
the operations further include
calculating an image variation of each pixel between each frame of the moving image data and a previous frame, and
correcting the image variation according to the moving speed or the moving angular speed,
wherein the extracting extracts the learning image data from the moving image data in a case where a sum of the image variations thus corrected is equal to or larger than a predetermined value.

13. The image data extraction apparatus according to Claim 10, wherein the moving speed or moving angular speed of the lens of the image-taking apparatus is calculated on the basis of a relative movement of the image-taking apparatus with respect to the movement of the movable body.

14. The image data extraction apparatus according to Claim 10, wherein the moving speed or moving angular speed of the lens of the image-taking apparatus is generated by a motion of the image-taking apparatus per se.

15. The image data extraction apparatus according to Claim 10, wherein the moving speed or moving angular speed of the lens of the image-taking apparatus is generated by zooming, panning, or tilting of the image-taking apparatus.

16. An image data extraction method comprising:
acquiring moving image data from an image-taking apparatus disposed in a movable body;
acquiring movement information regarding a movement of at least either the movable body or the image-taking apparatus; and
extracting learning image data that is used in learning of an identifier that identifies a physical object in an image.

17. An image data extraction method comprising:
acquiring moving image data from a fixed image-taking apparatus;
calculating an image variation of each pixel between each frame of the moving image data and a previous frame; and
extracting learning image data that is used in learning of an identifier that identifies a physical object in an image.
